# EUROPÄISCHE PATENTSCHRIFT

(11) **EP 1 072 476 B1**
(45) Veröffentlichungstag und Bekanntmachung des Hinweises auf die Patenterteilung: **19.10.2005**
(21) Anmeldenummer: 00114492.2
(22) Anmeldetag: 06.07.2000
(51) Int. Cl.: B60R 19/12, B60R 21/34

(54) **Stossfängerabstützung für verbesserten Fussgängerschutz bei Kraftfahrzeugen**
Bumper support for improved pedestrian protection on motor vehicles
Support de pare-chocs pour une meilleure protection des piétons sur les véhicules automobiles

(30) Priorität: 26.07.1999 DE 19934141
(43) Veröffentlichungstag der Anmeldung: 31.01.2001
(73) Patentinhaber: Dynamit Nobel Kunststoff GmbH, 91781 Weissenburg (DE)
(72) Erfinder: Leng, Robert, 91781 Weissenburg (DE)
(74) Vertreter: Scherzberg, Andreas Hans

(56) Entgegenhaltungen:
- EP-A- 1 036 715
- WO-A-01/00478
- DE-A- 3 003 568
- US-A- 5 139 304

## Beschreibung

Die Erfindung betrifft ein vorderes Stoßfängersystem zur Verbesserung des Fußgängerschutzes für ein Kraftfahrzeug mit einer energieabsorbierenden Struktur aus Schaumstoff, einer Außenhaut auf der energieabsorbierenden Struktur und einem Spoiler.

In den vergangenen Jahren wurden die Stoßfängersysteme in erster Linie für einen besseren Cw Wert, niedrigere Reparaturkosten sowie besseres Crashverhalten weiterentwickelt (ECE 42, Allianztest bis 15 km/h).

Weitere passive Sicherheitsmaßnahmen wie Airbag usw. beschränken sich auf den Selbstschutz aber nicht auf den Partner, besonders den Fußgänger.

Die relativ schweren Verletzungen bei Unfällen mit Fußgängern rühren von einem durch das Überfahren, zum anderen daher, daß der Fußgänger mit dem Bein unter das Fahrzeug taucht, während der Oberkörper auf die Motorhaube aufschlägt. Aufgrund dieser Verbiegung kommt es insbesondere im Kniebereich zu komplizierten Verletzungen mit Dauerschäden.

Die gattungsbildende DE 196 37 512 A1 zeigt sämtliche Merkmale des Oberbegriffs des Anspruchs 1, nämlich ein vorderes Stoßfängersystem zur Verbesserung des Fußgängerschutzes für ein Kraftfahrzeug mit einer energieabsorbierenden Struktur aus Schaumstoff, einer Außenhaut auf der energieabsorbierenden Struktur und einen Spoiler.

Die DE 30 03 568 A1 zeigt in einer Ausführungsform eine Stoßschutzvorrichtung für Kraftfahrzeug mit einem Stoßfänger und einem tieferliegenden, unterhalb des Stoßfängers angeordneten, im wesentlichen steifen Fußgänger-Schutzteil. Das Schutzteil erstreckt sich von der Stoßfängerunterkante aus nach unten. Dieses Schutzteil weist ein den Mittenbereich überdeckendes Frontstück auf, das spoilerartig vorsteht. Das Schutzteil weist eine Außenschicht oder Außenhaut auf, die den gesamten Schutzteil überzieht und über die gesamte Vorderfläche des Stoßfängers reicht.

Das Schutzteil weist einen Träger auf, der derart ausgestaltet ist, dass er bei einer über einen vorgegebenen Maximalwert, z. B. 10.000 N, liegenden Frontalkraft nachgiebig wird, so dass ab Kräften die über 10.000 N liegen, das Frontstück zurückweicht.

Die WO-A-0100478 und die EP-A-1 036 715 zeigen entweder keinen Spoiler oder keine energieabsorbierende Struktur aus Schaumstoff.

Die US 5,139,304 beschreibt als allgemeinen Stand der Technik einen hinteren Stoßfänger.

DE 195 08 039 A1 zeigt ein Fahrzeug mit einem am Bug beweglich angeordneten Spoiler, der trotz guter aerodynamischer Wirksamkeit einfach im Aufbau sein soll. Einen Fußgängerschutz offenbart die technische Lehre diese Dokumentes nicht.

Der Erfindung liegt die Aufgabe zu Grunde, ein vorderes Stoßfängersystem mit den Merkmalen des Oberbegriffs des Anspruchs 1 derart weiterzubilden, dass bei einem Unfall ein Fußgänger nicht mit einem Bein unter das Fahrzeug taucht, während der Oberkörper auf der Motorhaube aufschlägt, so dass es auf Grund dieser Verbiegung, insbesondere im Kniebereich, nicht zu komplizierten Verletzungen mit Dauerschäden kommt.

Erfindungsgemäß wird diese Aufgabe durch die Merkmale des Anspruchs 1 gelöst.

Bei einem Aufprall eines Fußgängers auf den Stoßfänger wird ein Teil der Aufprallenergie durch den Stoßfänger mit seiner energieabsorbierenden Struktur aufgefangen. Der Spoiler wird dabei in Fahrzeuglängsrichtung verschoben bis er an der Abstützung anliegt. Dadurch wird das Bein eines Fußgängers nicht unter das Fahrzeug eingeklemmt und der Biegewinkel klein gehalten. Ist zwischen den Längsträgern des Fahrzeugs ein Querträger mit Montageträger angeordnet, ist die Abstützung vorteilhafterweise am Montageträger befestigt.

Ist kein Querträger vorgesehen, ist die Abstützung zweckmäßigerweise an den Längsträgern befestigt.

Vorteilhafterweise ist das zum Spoiler gewandte Ende der Abstützung deckungsgleich zur Form des Spoilers ausgebildet, so daß eine möglichst große Fläche zur Abstützung zur Verfügung steht. Es reicht auch schon aus, wenn das Ende der Abstützung an die Form des Spoilers angepaßt ist.

Zweckmäßigerweise erstreckt sich die Abstützung einstückig nahezu über die gesamte Breite des Fahrzeugs, so daß der Spoiler überall abgestützt ist.

Je nach der Ausbildung des Frontends besteht die Abstützung erfindungsgemäß aus Blech, Kunststoff oder einem Hybrid.

In bevorzugter Ausführungsform ist die energieabsorbierende Struktur ein Schaumstoff.

Besonders eignet sich das erfindungsgemäße Stoßfängersystem für Personenkraftwagen.

Weitere Merkmale der Erfindung zeigen die Figuren, die nachfolgend beschrieben sind. Es zeigt:
- Fig. 1: einen Schnitt durch ein Kfz Frontend mit einer erfindungsgemäßen Abstützung des Spoilers,
- Fig. 2: eine Ausführungsform mit Befestigung der Abstützung am Montageträger, und
- Fig. 3: eine erfindungsgemäße Abstützung zur Befestigung an den Längsträgern.

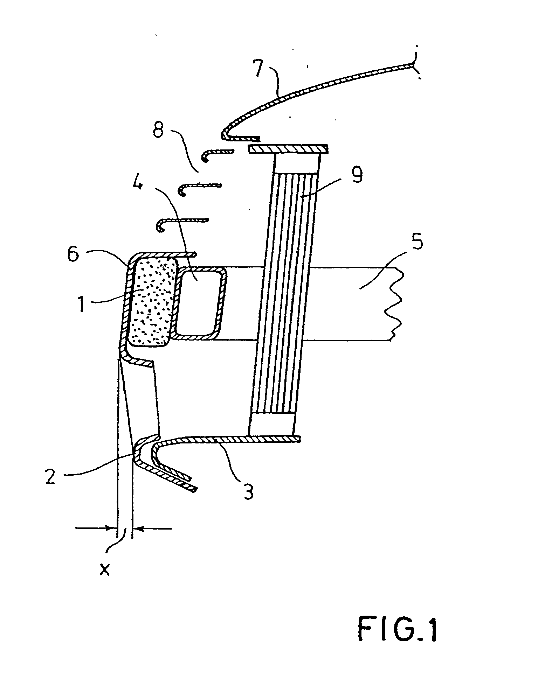

Fig. 1 zeigt in einem Schnitt ein Frontend eines Kraftfahrzeugs bzw. Personenkraftwagens. Zwischen den Längsträgern 5 ist ein Querträger 4 angeordnet, vor dem sich eine energieabsorbierende Struktur 1 befindet, die aus Schaumstoff besteht. Die Außenhaut 6 des Stoßfängers umgibt die energieabsorbierende Struktur 1 und bildet auch zugleich den unterhalb angeordneten Spoiler 2. Weiterhin sind die Motorhaube 7, die Lüftungsschlitze 8 und der Kühler 9 schematisch angedeutet.

Erfindungsgemäß ist der Spoiler 2 durch eine Abstützung 3 in seiner Auslenkung in Fahrzeuglängsrichtung begrenzt. Mit Fahrzeuglängsrichtung ist die Erstreckung der Längsträger 5 verstanden. Die Abstützung 3 ist mit radialem Abstand hinter dem Spoiler angeordnet. Das Maß x gibt die Auslenkung des Spoilers 2 an, bis dieser an der Abstützung 3 anliegt.

Bei einem Aufprall mit einem Fußgänger wird ein Teil der Energie durch den Stoßfänger mit dem Schaumstoff aufgefangen, während sich im unteren Bereich der Spoiler 2 nach hinten in Richtung Heck des Fahrzeugs bewegt. Der radiale Abstand x verringert sich, bis der Spoiler 2 an der Abstützung 3 anliegt. Dadurch wird das Bein des Fußgängers nicht unter das Fahrzeug eingeklemmt. Die Abstützung kann je nach Ausführung des Frontends in Blech, Kunststoff oder als Hybrid ausgeführt werden.

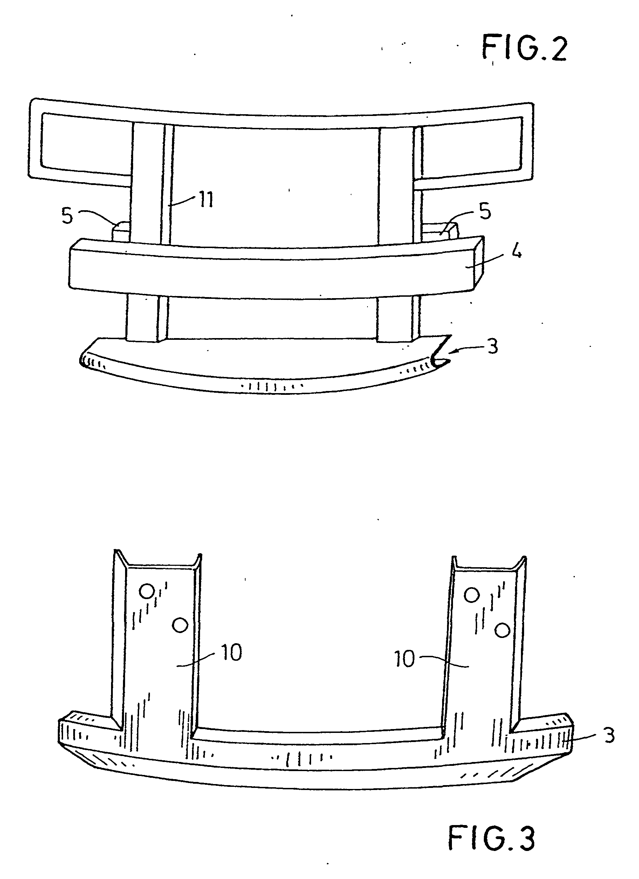

Fig. 2 zeigt eine Ausführungsform, bei der die Abstützung 3 am Montageträger 11 befestigt ist, der zwischen dem Querträger 4 und den Längsträgern 5 angeordnet ist.

Fig. 3 zeigt eine Ausführungsform der Abstützung 3 zur direkten Befestigung an den Längsträgern. Dies ist erforderlich, wenn kein Montageträger 11 vorgesehen ist. Über die Halterung 10 wird die Abstützung an den Längsträgern z. B. durch Verschraubung befestigt.

## Patentansprüche

1. Vorderes Stoßfängersystem zur Verbesserung des Fußgängerschutzes für ein Kraftfahrzeug mit einer energieabsorbierenden Struktur (1) aus Schaumstoff, einer Außenhaut (6) auf der energieabsorbierenden Struktur (1) und einem Spoiler (2), **dadurch gekennzeichnet**,
a) **dass** der Spoiler (2) einstückig mit der Außenhaut (6) ausgebildet ist,
b) **dass** der Spoiler (2) durch eine am Fahrzeug angebrachte Abstützung (3), die mit radialem Abstand (X) hinter dem Spoiler (2) angeordnet ist, in seiner Auslenkung in Fahrzeuglängsrichtung begrenzt ist
c) und dass bei einem Aufprall eines Fußgängers auf den Stoßfänger ein Teil der Aufprallenergie durch den Stoßfänger mit seiner energieabsorbierenden Struktur (1) aufgefangen wird und der Spoiler (2) dabei in Fahrzeuglängsrichtung verschoben wird, bis er an der Abstützung (3) anliegt.

2. Stoßfängersystem nach Anspruch 1, mit einem Querträger (4) und einem Montageträger (11), **dadurch gekennzeichnet, daß** die Abstützung (3) am Montageträger (11) befestigt ist, der zwischen dem Querträger (4) und den Längsträgern (5) angeordnet ist.

3. Stoßfängersystem nach Anspruch 1, **dadurch gekennzeichnet, daß** die Abstützung (3) an den Längsträgern (5) befestigt ist.

4. Stoßfängersystem nach einem der Ansprüche 1 bis 3, **dadurch gekennzeichnet, daß** das zum Spoiler (2) gewandte Ende der Abstützung (3) deckungsgleich zur Form des Spoilers (2) ausgebildet ist.

5. Stoßfängersystem nach einem der Ansprüche 1 bis 4, **dadurch gekennzeichnet, daß** sich die Abstützung (3) einstückig nahezu über die gesamte Breite des Fahrzeugs erstreckt.

6. Stoßfängersystem nach einem der Ansprüche 1 bis 5, **dadurch gekennzeichnet, daß** die Abstützung (3) je nach der Ausbildung des Frontends des Fahrzeugs aus Blech, Kunststoff oder einem Hybrid besteht.

## Claims

1. Front bumper system for the improvement of pedestrian protection for a motor vehicle having an energy-absorbing structure (1) made from foam material, an outer skin (6) on the energy-absorbing structure (1), and a spoiler (2), **characterised in that**
a) the spoiler (2) is formed in one piece with the outer skin (6),
b) the spoiler (2) is restricted in terms of its deflection in the longitudinal direction of the vehicle by a support (3) that is provided on the vehicle and is arranged at a radial distance (X) behind the spoiler (2),
c) and in the event of a pedestrian colliding with the bumper, a portion of the collision energy is taken up by the bumper with its energy-absorbing structure (1), and the spoiler (2) is then displaced in the longitudinal direction of the vehicle until it rests against the support (3).

2. Bumper system according to claim 1, having a transverse carrier (4) and an assembly carrier (11), **characterised in that** the support (3) is secured to the assembly carrier (11) that is arranged between the transverse carrier (4) and the longitudinal carriers (5).

3. Bumper system according to claim 1, **characterised in that** the support (3) is secured to the longitudinal carriers (5).

4. Bumper system according to one of claims 1 to 3, **characterised in that** the end of the support (3) that faces the spoiler (2) is formed so that it is congruent with the shape of the spoiler (2).

5. Bumper system according to one of claims 1 to 4, **characterised in that**.the support (3) extends in one piece over-almost the entire width of the vehicle.

6. Bumper system according to one of claims 1 to 5, **characterised in that** depending on the formation of the front end of the vehicle the support (3) is made from sheet metal, plastics material or a hybrid.

## Revendications

1. Système de pare-chocs avant, monté pour une meilleure protection des piétons sur un véhicule automobile et comprenant une structure (1) en matière cellulaire absorbant de l'énergie, une peau externe (6) posée sur cette structure (1) et un spoiler (2) **caractérisé en ce que**
a) le spoiler (2) forme une seule pièce avec la peau externe (6),
b) le spoiler (2) a son déplacement limité dans la direction longitudinale du véhicule par un appui (3) monté sur celui-ci à une certaine distance radiale (X) derrière le spoiler (2)
c) dans le cas d'un impact d'un piéton sur le pare-chocs, celui-ci absorbe une partie de l'énergie de l'impact par sa structure (1) absorbant de l'énergie et le spoiler (2) est déplacé selon la direction longitudinale du véhicule jusqu'à ce qu'il soit en contact avec l'appui (3).

2. Système de pare-chocs selon la revendication 1, avec un support transversal (4) et un support de montage (11) **caractérisé en ce que** l'appui (3) est fixé au support de montage (11) qui est disposé entre le support transversal (4) et les supports longitudinaux (5).

3. Système de pare-chocs selon la revendication 1, **caractérisé en ce que** l'appui (3) est fixé aux supports longitudinaux (5).

4. Système de pare-chocs selon une des revendications 1 à 3, **caractérisé en ce que** l'extrémité de l'appui (3) située du côté du spoiler (2) a une forme qui épouse celle du spoiler qui le recouvre.

5. Système de pare-chocs selon une des revendications 1 à 4, **caractérisé en ce que** l'appui (3) est constitué par une seule pièce qui s'étend à peu près sur toute la largeur du véhicule.

6. Système de pare-chocs selon une des revendications 1 à 5, **caractérisé en ce que** l'appui (3), selon la constitution de la face frontale du véhicule, est réalisé en tôle, en matière plastique ou en un matériau hybride.
